# EUROPEAN PATENT SPECIFICATION

(11) **EP 1 968 275 B1**
(45) Date of publication and mention of the grant of the patent: **12.10.2016**
(21) Application number: 07015856.3
(22) Date of filing: 11.08.2007
(51) Int. Cl.: H04L 29/06, H04L 29/08, H04W 28/06

(54) **A METHOD FOR COMPACTING SIP MESSAGES TO REDUCE ENERGY SPENT IN COMMUNICATION IN RESOURCE-CONSTRAINED NODES**
VERFAHREN ZUR KOMPAKTIERUNG VON SIP-NACHRICHTEN ZUR VERRINGERUNG DER VERBRAUCHTEN ENERGIE BEI DER KOMMUNIKATION IN KNOTEN MIT BEGRENZTEN RESSOURCEN
PROCÉDÉ POUR COMPRESSER DES MESSAGES SIP POUR RÉDUIRE L'ÉNERGIE DÉPENSÉE DANS LA COMMUNICATION DANS DES NOEUDS À RESTRICTION DE RESSOURCES

(30) Priority: 08.03.2007 EP 07004757
(43) Date of publication of application: 10.09.2008
(73) Proprietor: Deutsche Telekom AG, 53113 Bonn (DE)
(72) Inventor: Krishnamurthy, Sudha, Dr., 10627 Berlin (DE); Lange, Lajos, 10629 Berlin (DE)
(74) Representative: Kampfenkel, Klaus

(56) References cited:
- EP-A- 0 429 055
- GARCIA-MARTIN ERICSSON C BORMANN J OTT TZI/UNI BREMEN R PRICE SIEMENS/ROKE MANOR A B ROACH DYNAMICSOFT M: "(SDP) Static Dictionary for Signaling Compression (SigComp); rfc3485.txt" IETF STANDARD, INTERNET ENGINEERING TASK FORCE, IETF, CH, 1 February 2003 (2003-02-01), pages 1-30, XP015009268 ISSN: 0000-0003
- PRICE SIEMENS/ROKE MANOR C BORMANN TZI/UNI BREMEN J CHRISTOFFERSSON H HANNU ERICSSON Z LIU NOKIA J ROSENBERG DYNAMICSOFT R: "Signaling Compression (SigComp); rfc3320.txt" IETF STANDARD, INTERNET ENGINEERING TASK FORCE, IETF, CH, 1 January 2003 (2003-01-01), pages 1-62, XP015009190 ISSN: 0000-0003
- SUDHA KRISHNAMURTHY ED - YUTAKA YANAGISAWA ET AL: "TinySIP: Providing Seamless Access to Sensor-based Services", MOBILE AND UBIQUITOUS SYSTEMS - WORKSHOPS, 2006. 3RD ANNUAL INTERNATIO NAL CONFERENCE ON, IEEE, PI, 1 July 2006 (2006-07-01), pages 1-9, XP031089414, ISBN: 978-0-7803-9791-0

## Description

### Field of the invention

The invention relates to sensor networks used for event detection in general, and especially to data messages used for communicating with a sensor network.

### Background of the invention

Wireless sensor networks can be utilized for a variety of applications. Initially motivated by military applications, also a number of civilian application fields of wireless sensor networks have evolved. Surveillance, environmental monitoring or structural health monitoring are only some application examples of wireless sensor networks.

Typically a wireless sensor network is a large-scale wireless network of small sensor nodes, adapted for wireless, ad hoc, multi-hop communication between the nodes. For surveillance or monitoring of a specific area, typically homogeneous sensor nodes are randomly deployed in the area of interest remaining immobile after deployment.

Smart sensor nodes, such as motes, are embedded nodes that are not only capable of sensing, but they also have limited processing and storage capabilities, along with the ability to communicate wirelessly over a limited range. Hence, these smart sensor nodes can be regarded as a highly energy-constrained distributed system, with the ability to sense and generate data about the environment in which they are placed. However, sensor networks currently lack high-level messaging abstractions that support convenient user-level interactions.

From US 2005/0097200 A1 a method to transfer sensor data to an aggregating device over a network using SIP is known, wherein the sensors are provided as SIP user agents and the aggregating device as a SIP server. This method, however, cannot be applied to resource-constrained sensor nodes, since utilizing a SIP based communication requires considerable processing power and thus energy for message processing.

In "TinySIP: Providing Seamless Access to Sensor-based Services", 3rd Annual International Conference on Mobile and Ubiquitous Systems - Workshops, 2006, pages 1-9, a communication abstraction for accessing sensor-based services based on the Session Initiation Protocol (SIP) is described, wherein a gateway maps the SIP abstractions to a corresponding TinySIP abstraction and propagates the messages to the sensor nodes.

From RFC 3320 signaling compression for compressing messages generated by application protocols such as SIP is known, wherein a compressor is provided for compressing a message using a chosen compression algorithm and decompression functionality is provided by a Universal Decompression Virtual Machine, and wherein the compressor must ensure that the message can be decompressed using the resources available at the remote endpoint.

It is an object of the present invention to show a new and improved approach to communicate with sensor nodes of a sensor network, in particular a wireless sensor network.

### Summary of the Invention

The inventive solution of the object is achieved by each of the subject matter of the respective attached independent claims. Advantageous and/or preferred embodiments or refinements are the subject matter of the respective attached dependent claims.

An inventive resource constrained sensor node of a sensor network is adapted for communicating by means of an energy-efficient messaging protocol using a TinySIP messaging library implemented in the resource constrained sensor node, wherein said TinySIP messaging library comprises a collection of subprograms adapted to process received and generate TinySIP messages, wherein the TinySIP message represents a data message of a SIP network protocol, and wherein the TinySIP message has a maximum size of 29 bytes, said TinySIP message comprising a first and a second data block, wherein the second data block comprises compact data units of at least two different types, and the first data block comprises a matching data unit for each of said compact data units of the second data block, wherein the value of each matching data unit in the first data block is associated with the type of the matching compact data unit in the second data block, wherein the second data block comprises at least one compact data unit of a first type which comprises a numerical value associated with a field name of a field as defined by the SIP network protocol, and the second data block comprises for each compact data unit of said first type a variable number of associated compact data units of a second type, wherein said number depends on the numerical value of the associated compact data unit of the first type, wherein the TinySIP messaging library comprises a message handler element for handling incoming TinySIP messages which receives the incoming TinySIP messages and parses them, wherein the body of the TinySIP message contains the query or command to be executed, and wherein the message handler element handles TinySIP methods comprising ACK, BYE, INVITE, MESSAGE, NOTIFY, OPTION, PUBLISH and SUBSCRIBE, wherein there is a one-to-one correspondence between said TinySIP methods and SIP methods.

An exemplary method for converting a data message of a pre-defined network protocol into a compact data message of reduced data size comprises the steps of identifying at least one data field having sub-fields of at least two different types within said data message, converting each of the sub-fields of each identified data field into at least one compact data unit, wherein different sub-field types are converted into different types of compact data units, generating a first data block comprising a matching data unit for each of said compact data units, wherein the value of each data unit in the first data block is associated with the type of the matching compact data unit, assembling the compact data units of the identified data fields into a second data block, and generating a compact data message which comprises at least said first and second data blocks.

The data units of the first data block with special advantage provide information on the type of the respective matching compact data units and thereby information on how these matching compact data units are to be processed. Due to the mapping provided by the associated first and second data blocks, no separators are needed between the compact data units, which would normally be the case. This results in a compact data message which is especially adapted to be processed and/or generated by a resource-constrained node, for instance a node having limited energy, processing power and bandwidth like a wireless sensor node.

Smart sensor nodes have the potential to bridge the gap between the physical and digital world. To realize this potential, the invention proposes to integrate a network of sensors within a larger context-aware network, so that a user can seamlessly interact with everyday objects embedded with sensor nodes. By the above described method for converting a data message of a pre-defined network protocol into a compact data message the invention achieves such integration, since the compact data message is processable by an accordingly adapted resource-constrained sensor node using only a minimum of energy, while the pre-defined network protocol is the basis for communication within said larger context-aware network.

The method is especially adapted for converting data messages complying with a text-based network protocol, in particular for converting SIP (Session initiation Protocol) messages into compact data messages, wherein the compact data messages preferably are adapted to be processed and/or generated by a resource constrained node, in particular a resource constrained sensor node of a wireless sensor network. As for instance described in "Session Initiation Protocol", J. Rosenberg, H. Schulzrinne, G. Camarillo, A. Johnston, J. Peterson, R. Sparks, M. Handley and E. Schooler, June 2002, IETF, RFC 3261, the text-based protocol SIP utilizes a data format comprising a header and a body each of which in turn comprises information which is structure by means of field names and field values.

Accordingly, in the described method with advantage at least one identified data field comprises a field name and a field value as sub-fields. Said field name preferably is converted into a compact data unit which comprises a numerical value associated with the field name, wherein said numerical value is retrieved from a pre-defined lookup table, and said field value is preferably converted into a pre-defined number of compact data units, said pre-defined number depending on the type of the field value associated with the respective field name.

Since the data message to be converted preferably is a SIP message comprising a SIP header and a SIP body as a first and a second consecutive sequence of data fields, the method preferably comprises the step of converting the sub-fields of at least two consecutive sequences of data fields of a data message into a corresponding number of consecutive sequences of compact data units, wherein the first data block is generated such that it comprises at least one additional delimiter data unit at a position within the first data block which indicates a sequence change in the compact data units within the second data block.

Most preferably each of the data units in the first data block is represented by a data bit, since that way the size of the first data block can be minimized. Still, one bit suffices to identify the type of a matching compact data unit if only two alternatives need to be distinguished, as is the case for a compact data unit representing either a field name or a field value of a SIP message.

For practical purposes, i.e. for enabling a matching between the first and the second data block in the most easy way, the compact data units in the second data block all have the same size, which preferably is one byte. Accordingly, each of the compact data units in the second data block preferably is represented by a data octet.

Accordingly, with special advantage a SIP message is tokenized, wherein each data field of the SIP header and body, as for instance a field name or field value, is converted into a token according to a pre-defined lookup table. Most preferably textual tokens are avoided and rather tokens which represent a number are used, thereby achieving a very small size for the converted compact data message.

The converted compact data message preferably is transmitted within a sensor network as a payload of a TinyOS message, since TinyOS is a wide-spread operating system for wireless sensor networks. Since the maximum payload of a normal TinyOS message is only 29 bytes, the first data block preferably comprises three data octets and the second data block comprises 21 data octets, wherein 21 data bits of the first data block are respectively associated with the 21 data octets of the second data block.

A compact data message is adapted to be processed and/or generated by a resource constrained node and comprises a first and a second data block, wherein the second data block comprises compact data units of at least two different types and the first data block comprises a matching data unit for each of said compact data units of the second data block, wherein the value of each data unit in the first data block is associated with the type of the matching compact data unit in the second data block.

The second data block comprises at least one compact data unit of a first type with a numerical value associated with a field name of a field as defined by a given network protocol, and for each compact data unit of said first type a variable number of associated compact data units of a second type, wherein said number depends on the numerical value of the associated compact data unit of the first type. The given network protocol is a pre-defined text-based network protocol, in particular SIP (Session Initiation Protocol).

In a preferred embodiment of a compact data message the second data block comprises at least two consecutive sequences of compact data units and the first data block comprises at least one additional delimiter data unit located at a position within the first data block which indicates a sequence change in the compact data units within the second data block.

For providing a compact data message of especially small size the data units in the first data block preferably are data bits. The compact data units in the second data block preferably are data octets.

For the compact data message to be transmittable as a payload of a normal TinyOS message the first data block preferably comprises three data octets and the second data block comprises 21 data octets and wherein 21 data bits of the first data block are respectively associated with the 21 data octets of the second data block. The remaining five bytes of the 29 byte-payload of a TinyOS message with advantage is used for additional information.

Accordingly, the compact data message preferably further comprises a data unit for defining a type of the compact data message, a destination address and/or a communication method. The type of the compact data message can for instance define whether it is a request or a response.

The described compact data message can with advantage be utilized for communication within a sensor network. A respective inventive method for transmitting a data message within a sensor network comprises the steps of generating a compact data message as described above by a first resource constrained node of the sensor network, transmitting said compact data message from the first resource constrained node to a second resource constrained node of the sensor network, and processing the received compact data message by the second resource constrained node.

For integrating a sensor network within a larger context-aware network the invention further provides for a communication of sensor nodes of a sensor network with entities outside the sensor network. For this purpose an accordingly adapted gateway module is provided which is associated with a respective sensor network.

Accordingly a method for communicating with a sensor node of a sensor network is proposed with the steps of generating a data message of a pre-defined network protocol by a communication unit external of said sensor network, transmitting said data message from said communication unit to a gateway module associated with the sensor network, converting said data message into a compact data message by said gateway module by performing a method for converting a data message as described above, and transmitting said compact data message from the gateway module to a resource constrained node of the sensor network.

Analogous for the opposite communication direction an exemplary method for communicating with a sensor node of a sensor networkcomprises the steps of generating a compact data message as described above by a resource constrained node of the sensor network, transmitting said compact data message from said resource constrained node to a gateway module associated with the sensor network, converting said compact data message to a data message of a pre-defined network protocol by said gateway module, and transmitting said data message of a pre-defined network protocol from the gateway module to a communication unit external to the sensor network.

By utilizing two gateway modules advantageously also a communication between two different sensor networks is enabled. A respective method for communicating between different sensor networks comprises the steps of generating a first compact data message by a first resource constrained node of a first sensor network, transmitting said first compact data message from said first resource constrained node to a first gateway module associated with the first sensor network, converting said first compact data message into a data message of a pre-defined network protocol by said first gateway module, transmitting said data message of a pre-defined network protocol from the first gateway module to a second gateway module associated with a second sensor network, converting said data message into a second compact data message by said second gateway module and transmitting said second compact data message from the second gateway module to a second resource constrained node of the second sensor network.

The communication methods described above with advantage can be based on a pre-defined messaging semantics, wherein examples for a suitable semantics are instant messaging, session semantics and publish/subscribe semantics. However, any other suitable semantics can also be utilized by the invention.

An exemplary method for a communication between a sensor network and at least one communication unit external to the sensor network based on a publish-subscribe mechanism comprises the steps of transmitting a subscribe message from the external communication unit to a gateway module associated with the sensor network for subscribing to receive for a pre-defined duration of active subscription event-related data of a pre-defined event type detected within the sensor network, transmitting a trigger message as a compact data message to at least one resource constrained node of the sensor network from the gateway module for setting the resource constrained node to publishing mode, when the gateway module receives a subscribe message, transmitting a stop message as a compact data message to the resource constrained node from the gateway module for setting the resource constrained node to non-publishing mode, when there is no longer any active subscription, transmitting a publish message as a compact data message from the resource constrained node to the gateway module, when an event of the pre-defined type is detected within the sensor network, wherein said publish message comprises event-related data of the detected event, only when the resource constrained node is in publishing mode, converting said publish message into a data message of a pre-defined network protocol by the gateway module, and transmitting the converted data message to any subscribed external communication unit.

In a respective preferred embodiment of the above described methods each sensor network is a wireless sensor network and each resource constrained node is a sensor node of the respective wireless sensor network. Further, as already described above, said data message of a pre-defined network protocol preferably is a SIP message.

For enabling both, communication within a sensor network and between different sensor networks, at least one compact data message preferably comprises a data unit for identifying whether the sender and receiver are within the same sensor network. This is especially advantageous when routing a data message originating from a sensor node for deciding whether to route the data message to a sensor node within the sensor network or to a gateway associated with the sensor network.

Further, an exemplary gateway module, associated with at least one sensor network, is adapted to convert a data message of a pre-defined network protocol into a compact data message by performing a method for converting a data message as described above. The gateway module preferably is also adapted to convert a compact data message as described above into a data message of said pre-defined network protocol.

The messaging protocol that is proposed by the invention with special advantage leverages the communication abstractions provided by the Session Initiation Protocol (SIP) to enable application-level interactions with sensor nodes using publish-subscribe, instant messaging, and session-based semantics. The interactions may be between external users and sensor nodes or between sensor nodes. While SIP provides useful communication abstractions, it is a text-based messaging protocol and the messages use ASCII strings which results in long messages. However, sensor nodes have limited resources and communication using such long messages is energy-intensive. Hence, an exemplary method is proposed to compact the SIP message format for data communication with resource constrained nodes, such as wireless sensor nodes, with the goal of reducing the energy spent in communication and processing the message.

### Brief Description of the Figures

It is shown in
- Fig. 1: schematically the message format of a preferred embodiment of an inventive compact data message,
- Fig. 2: a schematic view of a sensor network accessible via an associated gateway adapted for conversion between SIP messages and compact data messages as shown in Fig. 1,
- Fig. 3: schematically functional components for handling compact data messages as shown in Fig. 1,
- Fig. 4a: a schematic view of a main graphical user interface of a client device adapted to interact with deployed sensor nodes,
- Fig. 4b: schematically a room view of the interface shown in Fig. 4a,
- Fig. 5: schematically the setup for registering services offered by sensor nodes,
- Fig. 6: schematically the message flow to set up a session between a user agent client and a sensor node, and
- Fig. 7: schematically the message flow for event notification in a publish-subscribe application.

### Detailed Description of the Invention

Subsequently, preferred but exemplar embodiments of the invention are described in more detail with regard to the figures.

In order to interact with resource-constrained nodes, such as sensor nodes in a wireless sensor network, the invention provides an energy-efficient messaging protocol with minimal communication overhead, thereby reducing the energy spent in communication and parsing the message. Resource-constrained nodes in particular are sensor nodes with low energy and/or processing power which are typically arranged in a wireless sensor network having limited bandwidth.

The known SIP protocol provides relevant communication abstractions to interact with sensor nodes. However, SIP is a text-based protocol, wherein SIP messages use ASCII strings and allocate one byte for each character which results in long messages.

The invention provides an energy-efficient message format for communicating with resource-constrained sensor nodes, which in a most preferred embodiment is suitable to represent a SIP message and can be transmitted as a payload in a TinyOS message. Hence, said energy-efficient message format, to which in the following will also be referred to as TinySIP, advantageously allows a SIP message to be accommodated in a 29-byte payload, while at the same time conform to the SIP messaging semantics. In addition, the message format allows a mote to parse the TinySIP messages in an energy-efficient manner. For conversion between SIP messages and TinySIP messages an accordingly adapted gateway is proposed by the invention which preferably is associated with a sensor network.

In the following, first the standard SIP message format and is briefly described showing why it is useful to be utilized in the context of sensor networks, and then the TinySIP message format as a preferred embodiment of an inventive compact data message is described.

SIP is an application-layer protocol that allows multiple end-points to establish media sessions with each other. As part of this, it performs end-point discovery, session establishment, and session termination. A SIP infrastructure consists of user agents and network servers. A user agent is an entity that acts on behalf of someone who wants to participate in message exchanges. In addition to user agents, there are two types of network servers: proxy and redirect server. Usually SIP user agents are associated with a proxy server through which all outgoing requests are sent and incoming responses are received. A proxy receives a request, determines the next hop server to send the message to, and then forwards the request. A SIP user agent is identified by its SIP URI, which is essentially a combination of attributes. The URI (Uniform Resource Identifier) can refer to an individual entity or a group of end-points. SIP user agents register their current contact information by sending a REGISTER request and update that information when their location or context changes. In order to route a message to a SIP end-point, the proxy contacts the location service to obtain the current contact information for that end-point. The attribute-based addressing feature, combined with the ability of the SIP network servers to discover the current contact information of the end-points while routing the messages, makes SIP a useful messaging mechanism for accessing sensor-based services.

SIP defines an extensible set of communication abstractions that can be used to provide session semantics, publish-subscribe semantics, and instant messaging. These abstractions are useful in the context of many sensor network applications. Session setup allows two end-points to interact continuously over a period of time. One of the end-points initiates the session by sending an INVITE message to the remote end-point. SIP allows invitations to be sent point-to-point, or to a group of end-points. SIP provides a general framework for event notifications. A SIP end-point requests asynchronous notifications about an event of interest by sending a SUBSCRIBE request to the entity monitoring the event, known as event publisher. The event publisher informs its event state compositor (ESC) about any changes in the state of an event by sending a PUBLISH message. The ESC then notifies the subscribers about the event through the NOTIFY method. The SIP protocol allows participants to exchange short messages in near real-time using the MESSAGE method. SIP also has a provision for exchanging instant messages within an active session. In addition, SIP allows requests to be handled in different ways. A proxy server can fork a request, sending it in parallel to multiple next-hop servers. SIP has rules for merging and returning multiple responses to the client. This feature is useful in the case of sensor queries, when the final destination of the request is not concretely specified and therefore, the proxy servers need to try different possibilities. SIP also provides the REFER method that allows an end-point to transfer or redirect the session that it is currently participating in, to another end-point and this is useful when the energy resources of the nodes that are currently participating in a session get depleted.

SIP users can publish their current context, which includes current location, available communication devices, and other resources in the neighborhood. The SIP network servers can use the information that is published, for delivering messages based on the current context of the user. Thus, SIP inherently provides a good framework for user mobility. The SIP infrastructure and methods can also be leveraged to support service/session mobility, thereby enabling a service to continue undisrupted, even when the end-point that is providing the service is mobile. Finally, SIP is a mature, widely deployed technology. It interoperates well with different kinds of media. Several enterprises have invested considerably in the SIP infrastructure. Many mobile devices already support SIP and this trend is likely to continue in future mobile devices. Hence, the familiarity of the SIP interface provides a further advantage for choosing a SIP-based approach for providing seamless access to sensor-based services.

The SIP communication methods described above provide many of the messaging semantics that are useful for interacting with sensor-based services. Therefore, those methods form the basis for the TinySIP messaging protocol, which is a preferred embodiment of the invention, with the goal of enabling distributed interactions with sensor nodes.

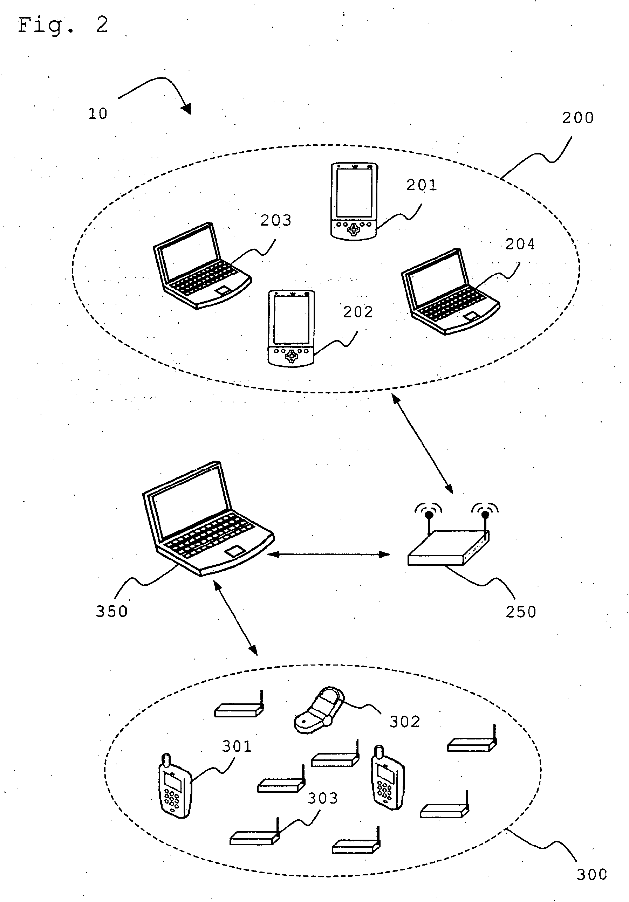

The inventive solution avoids to deploy a lightweight SIP infrastructure on the sensor nodes, whereby the sensor nodes do not need to have an IP address, which in turn allows to easily add or remove sensor nodes deployed as part of a larger network in environments, such as a smart hospital or a smart home. The inventive design of a communication system, as shown in Fig. 2, uses a gateway 350 at the edge of a sensor network 300 to interface between the SIP clients 201-204 and sensor nodes, exemplary denoted with reference signs 301-303, wherein a TinySIP messaging library is implemented to run on the sensor nodes 301-303, taking into account the resource constraints of the sensor nodes 301-303, while at the same time conforming to the messaging semantics of SIP.

The role of the gateway 350 is twofold. First, it performs a mapping between the standard SIP messages and the more compact, energy-efficient TinySIP message format designed for sensor nodes. This involves mapping addresses and field names represented by ASCII strings to numeric codes and performing the reverse translation for messages that are sent from the sensor nodes 301-303 to the external SIP clients 201-204. The use of a gateway 350 allows to use a more energy-efficient version of SIP for sensor nodes, without changing the abstractions that standard SIP clients are already familiar with, and this in turn, enables easier integration.

Second, while several sensor nodes currently support a Zigbee interface, many mobile devices still lack support for it. Hence, the use of a gateway 350, enables to forward TinySIP messages to the sensor nodes 301-303 using routing protocols that are more appropriate for sensor networks.

A generic SIP message consists of a start line, a message header, and the message body. The start line differentiates a SIP request from a SIP response message. The start line for a request includes the request method and the request-URI, while the start line for a response message includes the status code. The SIP message header has a variable set of fields. A field always begins with a field name followed by a colon and the field value, all in ASCII. The message body is application-specific.

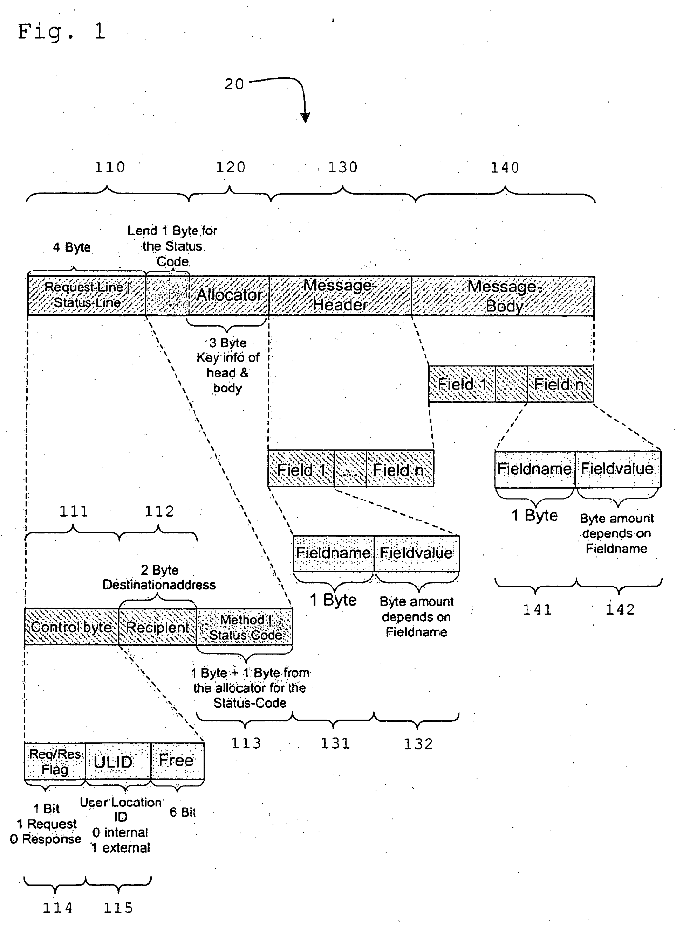

A preferred embodiment of a TinySIP message 20, as shown in Fig. 1, preferably is transmitted as a payload within a TinyOS message. Like a SIP message, the TinySIP message format also has a start-line 110, a header 130, and a body 140 segment. The start-line 110 begins with the control byte 111 which comprises a request/response flag 114 and the User-Location-Identifier (ULID) flag 115. If the request/response flag 114 is set to 1, the message is a TinySIP request, otherwise it is a response message.

TinySIP is designed to serve as a messaging mechanism not only between external users and the sensor nodes in a wireless sensor network, but also as a distributed messaging mechanism between sensor nodes within and across different sensor networks. However, when the end-points are not within the same sensor network, then mediation of the TinySIP gateway is employed. There may be more than one gateway and the sender address as indicated by the "From" field in the TinySIP messages use numeric identifiers, instead of ASCII strings. Hence, a mechanism is provided that enables a sensor node to easily distinguish between an end-point that is external to the sensor network and an end-point that is internal to the network, wherein for this purpose the ULID flag 115 is used. If the ULID flag 115 is set, it indicates to the sensor node that the TinySIP message was forwarded by the TinySIP gateway on behalf of an external sender and hence, the response has to be sent through the TinySIP gateway.

The next field after the control byte 111 is the recipient address 112, for which in the shown embodiment two bytes of data are used. A recipient address field is used in the TinyOS message header as well as,in the TinySIP start-line 110. The former determines the next hop node when a TinyOS message carrying a TinySIP payload is routed within the sensor network. On the other hand, when the TinySIP gateway receives a message, it extracts the TinySIP payload and uses the recipient address 112 in the TinySIP message start-line 110 to determine the final recipient of the SIP message. The last field 113 in the start-line comprises one byte defining the name of the communication method. While a SIP message uses ASCII strings to denote method names, like REGISTER, INVITE, etc., in a TinySIP message the method names are mapped to numeric codes to achieve a more compact message format. Thus, the fields are tokenized and a 1-byte token for'the communication method is provided in field 113. Furthermore, field 113 also comprises a 1-byte token defining the status code.

The TinySIP header 130 consists of a series of 1-byte field names 131 respectively followed by a field value 132 of variable length. Variable length field values 132 are used, because it results in a more efficient use of space. The TinySIP message body 140 has the same structure as the header 130, but the field names 141 and values 142 in the body 140 depend on the "Content-Type" field in the header 130.

For parsing variable length field values 132 and 142 consecutive fields need to be separated. In the prior art this is typically done by using a special separator byte to signal the end of a field value. However, this consumes one extra byte for each field.

The invention instead uses a bitmap 120, which results in a more compact solution. The 3-byte bitmap 120 describes the structure of the TinySIP header 130 and body 140, both of which together take up 21 bytes. If a bit in the bitmap 120 is set to 1, it indicates to the parser module in the TinySIP library that the corresponding byte in the header 130 or body 140 respectively is a field name. On the other hand, if the bit in the bitmap 120 is set to 0, then the corresponding byte is a field value. Thus, a parser can infer the byte length of a field value by counting the number of consecutive zeroes in the corresponding bitmap positions of bitmap 120. When two 1's appear in adjacent positions in the bitmap, it indicates to the parser that the header 130 has ended and that the TinySIP message body 140 has begun.

In summary, a TinySIP message in the shown embodiment has a maximum size of 29 bytes, which is divided into 5 bytes for the start-line 110, 3 bytes for the bitmap 120, and the remaining 21 bytes for the header 130 and body 140, wherein the start-line 110 comprises 1 byte for the control byte, 2 bytes for the recipient address, and 2 bytes for the method and status codes. The bitmap 120 comprises 24 bits, out of which 21 point to 21 corresponding bytes in the header 130 and body 140 and two bits which are used to demarcate header 130 and body 140. Compared to the alternative of using a special separator byte after each respective field value 132 and 142, the bitmap solution that is most advantageously proposed by the invention provides a space savings in the range of 6% to 19.5% in the best case. Using the inventive method for converting an original SIP message, the resulting compacted message is about 80% shorter than the original message.

With a compact message 20 as described above,:it is possible to interact with sensor nodes by setting up long-term sessions, send queries using instant messages, and receive event notifications using publish-subscribe semantics. A respective communication system 10 is shown in Fig. 2 which enables the user of a communication device 201, 202, 203 or 204 within a wireless, SIP-enabled communication network 200, as for instance a local WLAN or the Internet, to seamlessly interact with at least one sensor node of a sensor network 300, exemplary denoted with reference signs 301 to 303. An inventive gateway 350 receives regular SIP messages and translates them into compact messages, i.e. TinySIP messages 20 as shown in Fig. 1, before forwarding them to the sensor nodes 301-303. Similarly, the gateway 350 receives compact messages from the sensor nodes 301-303, which it then translates into regular SIP messages.

In the shown embodiment the communication network 200 is provided with an associated access point 250, connectable to each of the communication devices 201 to 204. Said access point 250 is further connectable to gateway 350 which is associated with the sensor network 300. The access point 250 and the gateway 350 can also be integrated into a single module. Of course, also various other possible setups for providing communication between communication devices 201 to 204 and gateway 350 are conceivable for a person skilled in the art.

Thus, in order to interact with a sensor node 301-303, the user of one of the client devices 201 to 204 for instance sends regular SIP messages to the access point 250 from which they are forwarded to the gateway 350. The gateway 350 maps the SIP messages into the more energy-efficient TinySIP message format described above, and forwards the message to the respective sensor node. The receiving sensor node parses and reacts to the incoming message. With the preferred maximum size for the compacted message of 29 bytes it is approximately 80% smaller than the original message. Both the sensor nodes 301-303 of the sensor network 300 as well as the client devices 201-204 of the communication network 200 which interact with the sensor nodes may be stationary or mobile devices, such as for instance mobile phones, PDAs or laptops.

In a communication system as described above multiple clients 201-204 on the Internet or other traditional networks are enabled to seamlessly interact with the sensor nodes 301-303 for different purposes. Some clients may even compose services spanning multiple sensor networks into a single end-to-end service for use by applications. In further embodiments, users and/or administrators may be enabled to remotely control the sensor devices and re-program the services running on the nodes.

The communication system 10 and in particular the gateway 350 furthermore preferably is adapted to send a request in parallel to multiple sensor end-points and forward messages to other sensor nodes, when the resources of the current nodes deplete.

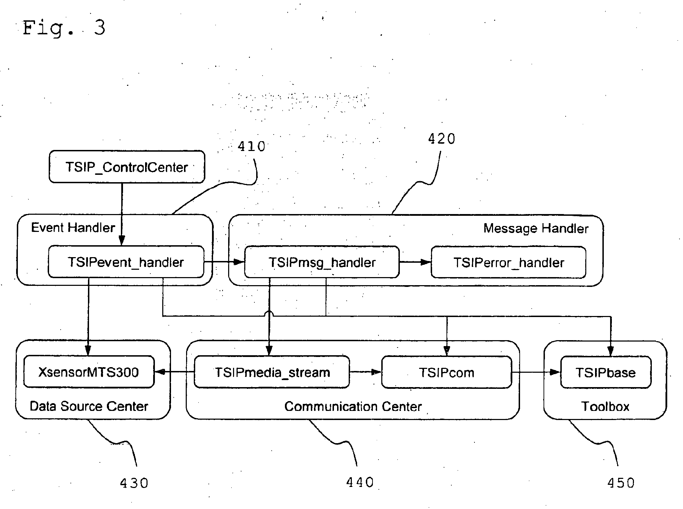

In Fig. 3 schematically a preferred embodiment of a TinySIP software library is shown which comprises a collection of subprograms adapted to process and/or generate compact TinySIP data messages as described above. The library has five main elements: the event handler 410, message handler 420, communication center 440, data source center 430, and the toolbox 450, as shown in Fig. 3. The event handler element 410 is responsible for registering and publishing events. The event handler 410 associates appropriate sensors with the events of interest and monitors the information reported by the sensors, in order to publish events. The event handler 410 is also responsible for periodically sending HELLO packets to signal the presence of the sensor nodes at their locations. Preferably, the location is determined by the nearest gateway in the neighborhood of the sensor node. However, also more fine-grained location tracking algorithms advantageously can be utilized which enable a client to query the location of an object tagged with a sensor node more accurately. The message handler element 420 is responsible for handling incoming TinySIP messages. The main component is the TSIPmsg_handler, which receives the incoming messages and parses them. TinySIP methods which preferably are handled by the message handler component 420 comprise ACK, BYE, INVITE, MESSAGE, NOTIFY, OPTION, PUBLISH, and SUBSCRIBE.

The message handler 420 also sends provisional responses. In addition, if there is an error in handling an incoming message, for instance due to erroneous field values, then the TSIPerror_handler component is used to handle the error in accordance with the SIP semantics. The error responses are then transmitted to the SIP client using the TinySIP communication center element 440.

The communication center element 440 provides the messaging interface to send and receive TinySIP messages. TinySIP messages use their own Active Message channel, equivalent to a port, which in hexadecimal is 0xAC. This channel number is chosen, because 0xAC in binary view is 101'0'110'0 and this can be interpreted as 5'0'6'0, wherein 5060 is the port used by standard SIP messages. The communication center 440 also supports a TSIP media_stream component, which is used for sending a continuous stream of sensor data, after a session has been established using the INVITE method.

The inventors have implemented the TinySIP messaging library on Zigbee-compliant MicaZ motes running TinyOS. Furthermore, on this basis a prototype application was developed which demonstrates the use of TinySIP in a smart hospital environment for tracking and remotely monitoring clinical resources, such as blood samples and hospital equipment, using mobile devices. Although in the described embodiment MicaZ motes have been utilized, any other suitable sensor node can also be utilized for the invention.

The motes are equipped with temperature, humidity, light, accelerometer, and magnetic sensors. Each sensor node in the sensor network has an identifier that uniquely identifies the node within the sensor network. The end-point of a TinySIP message may be an individual sensor node or a group of nodes. It is assumed that the sensor network is within the communication range of one or more gateways that map SIP methods to TinySIP methods.

However, to simplify the explanation, in the following the description is limited to a communication system 10 as shown in Fig. 2, with a single gateway 350. Sensor nodes 301-303 discover their gateway 350 by pre-configuration or by sending discovery requests. Each gateway 350 has a SIP URI and is associated with only one sensor network 300. The individual sensor nodes 301-303 do not have a SIP URI. Instead, the SIP URI of a sensor gateway 350 serves as the contact address of the sensor network 300 it is associated with. If there are multiple gateways associated with a sensor network, then the sensor nodes may be contacted through multiple SIP addresses.

In the following the preferred application scenario is described in which TinySIP is utilized in a smart hospital environment.

In a smart hospital environment sensor nodes can be attached to a variety of objects in order to automate many processes, such as real-time tracking and monitoring of clinical resources in real-time. Furthermore, it is an environment that benefits from diverse user-level communication abstractions for interacting with the sensor nodes. In the following different usage scenarios in a smart hospital are described, highlighting the relevant communication abstractions, and then it is explained how the invention is advantageously utilized for realizing these scenarios.

Usage scenarios:
1. Blood samples need to be maintained at an optimum temperature and continuously monitored to detect bacterial growth. The errors resulting from administering inappropriate blood samples during transfusion can be fatal. Motes are used which are equipped with temperature sensors to continuously monitor the temperature of blood samples. Similarly, the sensors can also be used to continuously monitor the temperature of a patient for a certain duration of time. Hospital staff, such as a nurse or administrator, can request the temperature data to be streamed to them over a period of time.
2. Hospitals lose significant revenue in misplaced and lost equipment. By attaching important clinical equipment with sensor nodes and using simple location tracking technologies, the hospital staff can send queries to determine the current location of the equipment in real-time. Similarly, by attaching sensor nodes to doctors and nurses, patients can query their current location at a coarse level.
3. By attaching sensor nodes to patients, nurses and doctors are enabled to remotely actuate the sensor nodes and signal the patients at the appropriate time intervals to take the correct medication. Similarly, motes with photo sensors and microphones are used to detect whether the light or TV is on in a patient ward and a message is sent to the sensor nodes to turn the light off/on remotely.
4. Hospitals also lose revenue by inappropriately tracking the occupancy of the patient wards. By attaching the patient beds with sensor nodes, hospital staff can send a query in parallel to the different wards and get a real-time update on the vacant beds in the different wards. In the short term, this enables the staff to determine whether they can admit a new patient and in the long-term, monitoring the occupancy level of wards allows the hospital administrators to determine the need for building new wards.
5. Nurses may want to be notified about events, such as when someone enters the intensive care unit (ICU). Moreover, the nurses may be at different locations when the actual entry event occurs. Motes with accelerometers are attached to the doors of the ICU. When these sensor nodes detect entry events, they notify all the subscribers. Since this event is critical, the notification is delivered based on the current context of the subscribers.

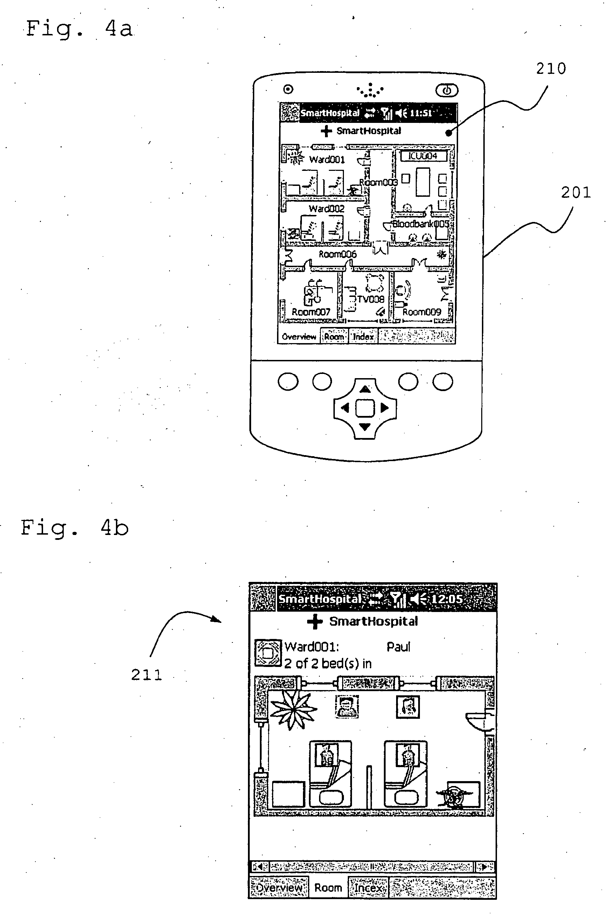

Fig. 4a and 4b show a preferred embodiment of a GUI client adapted to interact with the deployed sensors in a smart hospital environment. In the shown preferred embodiment the GUI 210 has been developed to run on devices that have a Windows Mobile environment. So, for instance, users install the GUI on a programmable cell phone 201, and interact with the sensor nodes. The main interface 210 ion this embodiment shows different areas of the hospital that are monitored by different sensors. These include two patient wards with a different number of beds, a cooler where blood samples are placed, an ICU, and a lounge area with TV and lighting equipment. When a user clicks on any of these locations, the client application sends a SIP instant message to query the entities currently registered at that location. The gateway then responds with all the entities that are currently registered in that location.

This information is updated on the GUI 210. For example in Fig. 4b, when a user clicks on Ward001, the gateway in Ward001 returns a response containing all the sensor nodes currently registered with it. The GUI then displays the current view 211 of that patient ward, indicating the two patients that are currently occupying the beds in that ward. A user, such as a doctor or nurse, can interact with an entity by selecting the entity at that location and the type of message that needs to be sent to that entity. Then, internally, the client application chooses a SIP method that is appropriate for the interaction and transmits the SIP message to the sensor node. The message is intercepted by the TinySIP gateway, which maps the SIP message to the corresponding TinySIP message and forwards it to the appropriate destination sensor node. The sensor node uses the TinySIP messaging library to parse the incoming message and returns appropriate provisional responses, in accordance with the SIP standard.

In the following the actual exchange of messages using TinySIP is described, wherein session semantics, publish-subscribe, and instant messaging communication abstractions are used to realize the use cases listed above. Although there is a one-to-one correspondence between TinySIP methods and SIP methods, for clarity of explanation in the following description, the TINYSIP prefix is used to distinguish between TinySIP methods and the corresponding SIP methods.

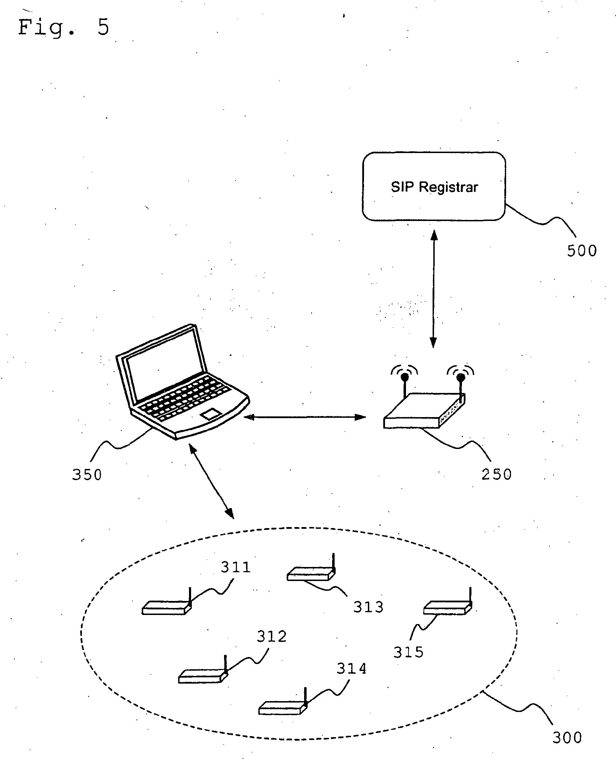

The first step is to register the services offered by the sensor nodes. The registration process allows clients to be aware of the services offered by the sensor nodes. The registration may be done by each individual node offering a service, or collectively by a manager that represents a group of nodes offering the service. Fig. 5 illustrates the registration process using TinySIP, for a group of temperature sensor nodes 311-315 that are monitoring the temperature of blood samples in a hospital environment. The manager node 315 sends a TINYSIP-REGISTER request to the gateway 350 to register the information that the nodes 311-315 can provide.

The TinySIP-REGISTER payload indicates that it is a request message, the method name is REGISTER, and that the registration is being sent to the gateway 350. The "Expires" field in the header indicates that the registration is valid for one hour and that the registration is being done by the mote whose identity in the wireless sensor network 300 is 7. In general, this identifier may be its mote-id, group-id, or a location identifier and it is relevant only within the sensor network 300. The identity may further be used to ensure the validity of the sensor node that is registering the service. When the TinySIP gateway 350 receives a TINYSIP-REGISTER request from a sensor node, in a first preferred embodiment it records the information locally in a database. In a second preferred embodiment in which an external SIP registrar 500 is present, the gateway 350 maps the registration to a regular SIP REGISTER request, specifies the contact address to be its own SIP address instead of advertising the sensor-specific identifier, and sends the registration to an appropriate SIP registrar 500, wherein in the shown embodiment the gateway 350 is connected to the SIP registrar 500 by means of an access point 250. Of course, the SIP registrar 500 can also be associated directly with the gateway 350. This registration enables the SIP registrar 500 to route a user's future SIP requests to sensor network 300 through the appropriate sensor gateway 350. Whenever the service provided by the sensor nodes 311-315 changes, for instance because the sensor network has been reprogrammed, or when the managers are replaced by new managers in order to conserve energy, the new managers can update the gateway by sending another TINYSIP-REGISTER request.

The body of the register request includes all the relevant attributes that will help a client to contact the appropriate sensor network 300 when it needs some sensor-specific information, or when it wants to subscribe to some sensor events.

After the sensors have registered their services, clients can now interact with them using different TinySIP interaction semantics.

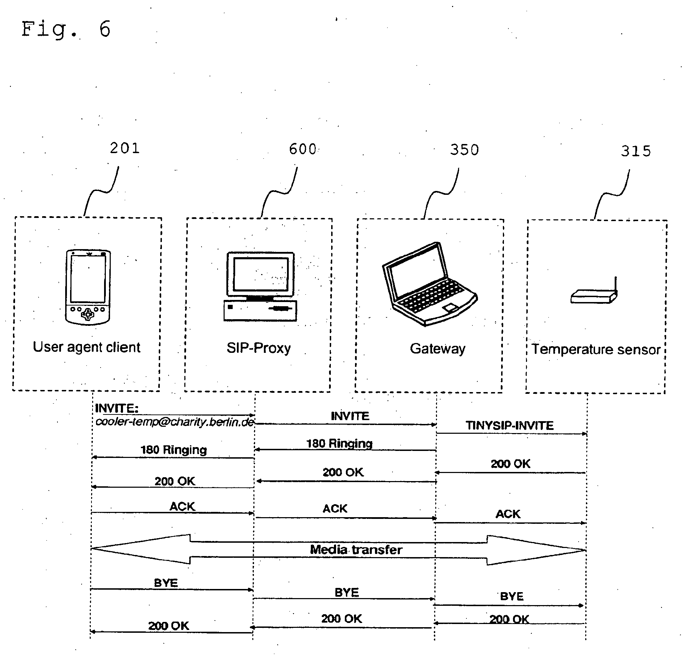

Referring to the example shown in Fig. 6 it is described how TinySIP enables a user to interact with the sensor nodes using session semantics and thereby realize the first usage scenario listed above.

A session is typically established for a certain duration of time. Unlike a short query, the response may not immediately follow a request in the session mode. Instead, the response from the sensors may be sent continuously as a stream or anytime during the course of an active session. In the smart hospital use case shown in Fig. 6, the user agent client (UAC) 201, named Jane, who is a nurse in the hospital, uses the GUI client on her mobile phone to initiate a session with the temperature sensors 315 monitoring the temperature of blood samples in a cooler, and requests the temperature data from them for a certain duration of time. Her request is translated into a SIP INVITE request and sent to the contact URI for the sensors.

If the UAC is registered with a proxy 600, then the INVITE request is intercepted by the proxy 600, as shown in Fig. 6. After obtaining the contact address, the proxy 600 forwards the request to the appropriate gateway 350. If the temperature sensors are accessible through multiple gateways, then the proxy 600 forks the request to multiple contact addresses.

When the sensor gateway 350 receives the INVITE, it maps the request to a TINYSIP-INVITE message. It then uses the information that it received as part of a previous TINYSIP-REGISTER message to route the TINYSIP-INVITE request to the appropriate sensor nodes inside the sensor network. Although in the typical case the invitation is sent to a single sensor node 315, the TinySIP messages can also be disseminated to a group of sensor nodes that can provide the requested information. According to the standard SIP semantics, as for instance described in "Session Initiation Protocol", J. Rosenberg, H. Schulzrinne, G. Camarillo, A. Johnston, J. Peterson, R. Sparks, M. Handley and E.

Schooler, June 2002, IETF, RFC 3261, clients that initiated a session receive provisional responses before the session is finally established. These provisional responses are typically identified by a code. In the normal case, the sensor node that is responsible for providing the requested information accepts the invitation by returning an affirmative response (200 OK). The gateway node forwards the response from the sensor network to the client. In turn, the client acknowledges the response from the sensor nodes by sending an ACK. After this handshake, the sensor nodes begin the media transfer according to the parameters agreed upon during the session establishment. In the example shown in Fig. 6, the data stream from the sensor node 315 consists of the raw temperature value. The gateway 350 interprets this raw value and converts it into appropriate units and forwards it to the client 201. The GUI then displays the continuous stream of temperature values graphically. While in the normal case a sensor node 315 that receives a TINYSIP-INVITE accepts the invitation, there may be cases when the sensor nodes may have to reject the invitation. For example, this may happen if the number of active sessions exceeds the maximum threshold that the sensor node 315 can manage with its resources. In such a case, the sensor node 315 can reject the INVITE by sending one of the standard SIP failure responses to the client.

Finally, whenever the user (Jane) wants to terminate the session, she sends a BYE request to the sensor gateway 350, as shown in Fig. 6. The gateway 350 forwards the request to the sensor nodes using the mechanism described above for the INVITE request. The sensor node 315 that is involved in the session accepts the termination by returning a 200 OK response to the client 201 through the gateway 350. If there are no other outstanding requests for data transfer, the sensor node transitions to a low power cycle to conserve energy. From the above explanation, it can be seen that although a SIP request from a user 201 indicates the end-point of the message to be the sensor gateway 350, in reality, the user 201 accesses the in-network services offered by an individual or group of sensor nodes 315 and this is made possible through the TinySIP messaging protocol on the sensor nodes.

SIP further provides the MESSAGE method to exchange instant messages between two end points. TinySIP extends the use of the standard SIP instant messaging semantics to send short queries to a sensor node as well as to remotely actuate and control sensor nodes.

The SIP message is routed to the sensor gateway indicated by the request URI. The sensor gateway maps the request to a TINYSIP-MESSAGE and forwards the request to the sensor nodes. The body of the message contains the query or command to be executed. The sensor node parses the request and reacts accordingly. In cases where the instant message triggers a response, for instance when a query is sent to determine if the lighting equipment or TV is on, the sensor nodes can in turn send another TINYSIP-MESSAGE with the response in the body of the message. The gateway maps it to a regular SIP MESSAGE and forwards the response to the user agent that sent the query.

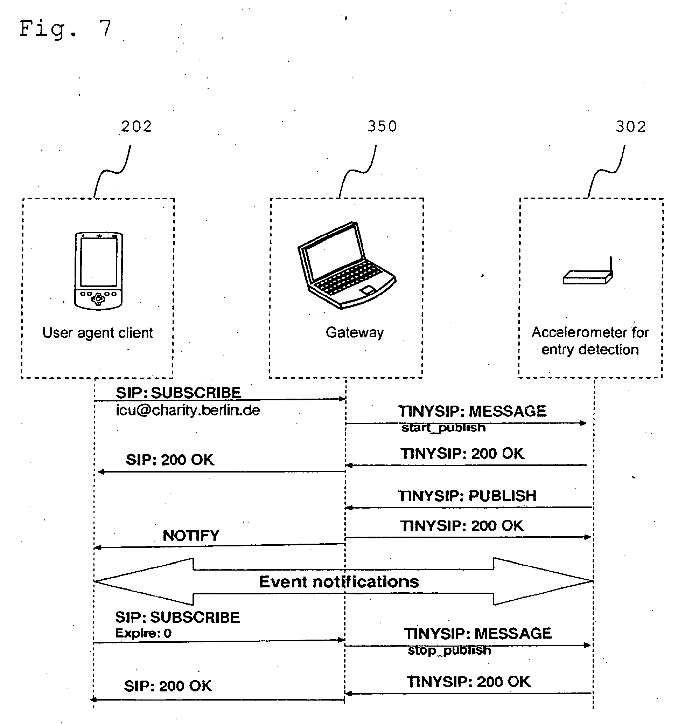

The TinySIP event publication and notification is an extension of the SIP event state publication process, as for instance described in "Session Initiation Protocol Extension for Event State Publication", A. Niemi, October 2004, IETF, RFC 3903. The sensor node publishes event states using the PUBLISH method and serves as the Event Publication Agent (EPA), while the TinySIP gateway that processes the PUBLISH requests serves as the Event State Compositor (ESC). Fig. 7 schematically illustrates the use of the TinySIP event notification abstraction in the hospital scenario. Here, a nurse using a user agent client 202 is interested in being notified whenever someone enters the ICU. This notification is critical and the notification has to be delivered, regardless of the current context of the nurse. In the described embodiment, motes 302 attached to accelerometers are affixed to the entrance of the ICU units. Whenever someone enters the ICU, the accelerometer publishes an entry event. The gateway 350 then notifies all the subscribers about the event. The actual end-point that monitors the event may be the entire sensor network, a single sensor node in the network, or a group of nodes represented by a manager. Users can determine the events supported by a sensor network by sending the SIP OPTIONS request.

Below the transcript of messages exchanged between the subscriber 202, the gateway 350 which acts as the ESC, and the sensor node 302 as the event publisher is shown using the inventive TinySIP implementation.

### 1. SUBSCRIPTION from UAC Jane

SUBSCRIBE sip:mote16@gateway.de SIP/2.0
CSeq: 1 SUBSCRIBE
To: <sip:mote16@gateway.de>
From: JANE <sip:123456@gateway.de>
Call-ID: 48560@gateway.de
Event: ICU-Entry (id: 0x04)
Expires: 600

### 2. TinySIP MESSAGE from TSIP-Gateway -> mote16

Control byte: 1100 0000 (0xc0)
Res/Req Flag: Request message (1)
User location ID Flag: External (1)
Destination address: <sip:mote16@gateway.de>
Method Code: MESSAGE (0x8)
Bitmap: 100100101011101100000000

Call-ID: 48560@gateway.de (0xd2b0)
CSeq: 1 MESSAGE
From: Base Station (0x1)
Content-Type: TinyOS_trigger (0x1)

Body:
   start_publish (0xb 0x1)

### 3. TinySIP PUBLISH from mote16 -> to TSIP Gateway (ESC)

Control byte: (0x80 | 0000 0000 bin)
Res/Req Flag: Request message (1)
User location ID Flag: Internal (0)
Destination address: Base Station (0x0001)
Method: PUBLISH (0xc)
Bitmap: 101001010010110110000000

Header:
   Call-ID: 0 (0x0)
   CSeq: 1 PUBLISH (0x1 0xc)
   From: <sip:mote16@gateway.de> (0x10)
   Expires: 3600 (0x10e)
   Event: ICU-entry (id:0x4)

### 4. SIP NOTIFY from Gateway (ESC) -> to UAC Jane

NOTIFY JANE <sip:123456@gateway.de> SIP/2.0
Call-ID: 48560@gateway.de
From: <sip:mote16@gateway.de>
To: JANE <sip:123456@gateway.de>
CSeq: 1 NOTIFY
Date: Fri Dec 22 20:14:06 2006
Event: ICU-Entry (id: 0x4)

In order to subscribe to a sensor event, a user, in this case the nurse, first sends a SIP SUBSCRIBE request by specifying the event of interest and the expiration period. In the shown example, the event of interest is the ICU entry event and the subscription period is 10 minutes. The subscription request is routed to the appropriate sensor gateway 350. If the sensor events provide sensitive information, the gateway 350 can use the SIP authentication mechanism to ensure that only valid subscribers have access to the sensor events.

Most preferably, the system is adapted to trigger the event publication on demand, i.e. only when there is an interested subscriber, so that the sensor nodes can conserve energy by avoiding unnecessary message transmissions. Hence, when the gateway 350 receives a subscription for the ICU entry event for the first time, it sends a short TinySIP instant message to the accelerometers in the ICU, with the body of the message indicating that the event publication has to be triggered, as shown in the transcript above. In the normal case, the appropriate sensor entity 302 in the network accepts the subscription and returns a 200 OK response. The gateway 350 then forwards the response to the subscriber 202. Thereafter, whenever the sensors detect an entry event in the ICU, they send a TINYSIP-PUBLISH method to the gateway 350, identifying the event in the header field, as shown in the transcript above. For each successful PUBLISH, the ESC, i.e. the gateway 350, generates an entity tag and returns it in the 200 OK response to the EPA, i.e. the sensor node 302. When the sensor node 302 updates the event state in subsequent PUBLISH requests, it specifies this entity tag in the "SIP-If-Match" header field, of the PUBLISH request, so that the gateway 350 can identify the event state. Each time the gateway 350 receives a PUBLISH request from the sensor node 302, it sends a NOTIFY message to inform interested subscribers 202 about the event. If the subscribers 202 can be contacted on their mobile phone, the notification is delivered as a text message. In the described embodiment the SIP event framework does not allow subscribers to specify the notification frequency as part of the subscription. However, the extension allows the subscribers to specify the notification frequency in the body of the subscription and this is useful in case of time-triggered events.

Finally, whenever the duration of a subscription expires, the sensor nodes simply remove the subscription. A subscriber can also explicitly unsubscribe to the event by sending a SUBSCRIBE request with the Expires field set to 0, as shown in Fig. 7. If there are no other outstanding subscriptions for that event, the gateway 350 then explicitly stops the publication process by sending an instant message to the sensor node 302 with the message body set to stop_publish. This helps the sensor nodes to conserve their energy. While in the shown embodiment the TinySIP gateway 350 is used to notify the subscribers 202, the SIP standard also allows the notifications to be directly sent from the publishers, i.e. the sensors 302, to the subscribers 202. However, that would require the resource-constrained sensor nodes 302 to keep track of all the subscriber requests.

Exemplary advantages of the invention comprise providing a compact, energy-efficient message format to enable interaction with sensor nodes through session semantics, instant messaging, and publish-subscribe semantics. With special advantage the messaging protocol can also be extended to support other semantics for interacting with sensor nodes. Further, the invention provides a messaging protocol which enables communication between devices on traditional networks and sensor nodes, as well as between sensor nodes within and across different networks. Still a further advantage is providing a messaging protocol which publishes events only on demand, in order to conserve energy.

The messaging protocol can also be used by the sensor nodes themselves to communicate with each other within a sensor network or across a distributed network. The invention further with advantage provides a lightweight protocol for which it takes less than 2 milliseconds to parse a compact data message, i.e. a TinySIP message, on the sensor nodes. Still another advantage is given by the fact that for utilizing the invention sensor nodes are not required to have an IP address.

Exemplary applications of the described invention comprise real-time tracking and monitoring of clinical assets in an e-Health scenario as described above, intelligent toys, use of sensors for facility management, and interaction in smart home or other smart environments.

## Claims

1. A resource constrained sensor node (301-303, 311-315) of a sensor network (300), adapted for communicating by means of an energy-efficient messaging protocol using a TinySIP messaging library implemented in the resource constrained sensor node, wherein said TinySIP messaging library comprises a collection of subprograms adapted to process received and generate TinySIP messages, wherein the TinySIP message represents a data message of a SIP network protocol, and wherein the TinySIP message has a maximum size of 29 bytes,
said TinySIP message comprising a first (120) and a second (130, 140) data block, wherein
- the second data block (130, 140) comprises compact data units of at least two different types (131, 141; 132, 142), and
- the first data block (120) comprises a matching data unit for each of said compact data units of the second data block (130, 140), wherein the value of each matching data unit in the first data block is associated with the type of the matching compact data unit (131, 132, 141, 142) in the second data block (130, 140), wherein
- the second data block (130, 140) comprises at least one compact data unit of a first type (131, 141) which comprises a numerical value associated with a field name of a field as defined by the SIP network protocol, and
- the second data block (130, 140) comprises for each compact data unit of said first type,(131, 141) a variable number of associated compact data units of a second type (132, 142), wherein said number depends on the numerical value of the associated compact data unit of the first type (131, 141),
wherein the TinySIP messaging library comprises a message handler element for handling incoming TinySIP messages which receives the incoming TinySIP messages and parses them, wherein the body of the TinySIP message contains the query or command to be executed, and wherein the message handler element handles TinySIP methods comprising ACK, BYE, INVITE, MESSAGE, NOTIFY, OPTION, PUBLISH and SUBSCRIBE, wherein there is a one-to-one correspondence between said TinySIP methods and SIP methods.

2. The resource constrained sensor node of claim 1, wherein
- the second data block (130, 140) comprises at least two consecutive sequences of compact data units and
- the first data block (120) comprises at least one additional delimiter data unit located at a position within the first data block (120) which indicates a sequence change in the compact data units within the second data block (130, 140).

3. The resource constrained sensor node of any one of claims 1 or 2, wherein the data units in the first data block (120) are data bits.

4. The resource constrained sensor node of any one of claims 1 to 3, wherein the compact data units in the second data block (130, 140) are data octets.

5. The resource constrained sensor node of any one of claims 1 to 4, wherein the first data block (120) comprises three data octets and the second data block (130, 140) comprises 21 data octets and wherein 21 data bits of the first data block (120) are respectively associated with the 21 data octets of the second data block (130, 140).

6. The resource constrained sensor node of any one of claims 1 to 5, wherein the TinySIP message further comprises a data unit (114) for defining a type of the TinySIP message.

7. The resource constrained sensor node of any one of claims 1 to 6, wherein the TinySIP message further comprises a data unit (112) for defining a destination address.

8. A method for transmitting a data message within a sensor network, said sensor network comprising at least a first and a second resource constrained sensor node according to any one of claims 1 to 7, comprising the steps of
- generating a TinySIP message (20) by the first resource constrained node (301-303),
- transmitting said TinySIP message from the first resource constrained node (301-303) to the second resource constrained node (301-303) of the sensor network (300),
- processing the received TinySIP message by the second resource constrained node (301-303) using a TinySIP messaging library implemented in the second resource constrained sensor node, wherein said TinySIP messaging library comprises a collection of subprograms adapted to process received and generate TinySIP messages, wherein the TinySIP message represents a data message of a SIP network protocol, and wherein the TinySIP message has a maximum size of 29 bytes,
wherein the TinySIP messaging library comprises a message handler element for handling incoming TinySIP messages which receives the incoming TinySIP messages and parses them, wherein the body of the TinySIP message contains the query or command to be executed, and wherein the message handler element handles TinySIP methods comprising ACK, BYE, INVITE, MESSAGE, NOTIFY, OPTION, PUBLISH and SUBSCRIBE, wherein there is a one-to-one correspondence between said TinySIP methods and SIP methods.

9. A method for communicating with a resource constrained sensor node (301-303) according to any one of claims 1 to 7 of a sensor network (300), comprising the steps of
- generating a SIP message by a communication unit (201-204) external of said sensor network (300),
- transmitting said SIP message from said communication unit (201-204) to a gateway module (350) associated with the sensor network (300),
- converting said SIP message into a TinySIP message (20) by said gateway module (350), and
- transmitting said TinySIP message (20) from the gateway module (350) to the resource constrained sensor node (301-303) of the sensor network (300),
- processing the received TinySIP message by said resource constrained sensor node (301-303) using a TinySIP messaging library implemented in the resource constrained sensor node, wherein said TinySIP messaging library comprises a collection of subprograms adapted to process received and generate TinySIP messages, wherein the TinySIP message represents a data message of a SIP network protocol, and wherein the TinySIP message has a maximum size of 29 bytes, wherein the TinySIP messaging library comprises a message handler element for handling incoming TinySIP messages which receives the incoming TinySIP messages and parses them, wherein the body of the TinySIP message contains the query or command to be executed, and wherein the message handler element handles TinySIP methods comprising ACK, BYE, INVITE, MESSAGE, NOTIFY, OPTION, PUBLISH and SUBSCRIBE, wherein there is a one-to-one correspondence between said TinySIP methods and SIP methods.

10. A method for communicating between different sensor networks, comprising the steps of
- generating a first TinySIP message (20) by a first resource constrained sensor node according to any one of claims 1 to 7 of a first sensor network,
- transmitting said first TinySIP message (20) from said first resource constrained sensor node to a first gateway module associated with the first sensor network,
- converting said first TinySIP message (20) into a SIP message by said first gateway module,
- transmitting said SIP message from the first gateway module to a second gateway module associated with a second sensor network,
- converting said SIP message into a second TinySIP message (20) by said second gateway module,
- transmitting said second TiynSIP message (20) from the second gateway module to a second resource constrained sensor node according to any one of claims 1 to 7 of the second sensor network, and
- processing the received second TinySIP message by the second resource constrained sensor node (301-303) using a TinySIP messaging library implemented in the second resource constrained sensor node, wherein said TinySIP messaging library comprises a collection of subprograms adapted to process received and generate TinySIP messages, wherein the TinySIP message represents a data message of a SIP network protocol, and wherein the TinySIP message has a maximum size of 29 bytes,
wherein the TinySIP messaging library comprises a message handler element for handling incoming TinySIP messages which receives the incoming TinySIP messages and parses them, wherein the body of the TinySIP message contains the query or command to be executed, and wherein the message handler element handles TinySIP methods comprising ACK, BYE, INVITE, MESSAGE, NOTIFY, OPTION, PUBLISH and SUBSCRIBE, wherein there is a one-to-one correspondence between said TinySIP methods and SIP methods.

11. The method according to any one of the claims 8 to 10, wherein said communication is based on a pre-defined communication semantics.

12. The method according to claim 11, wherein said communication semantics is instant messaging, session semantics or publish/subscribe semantics.

## Patentansprüche

1. Sensorknoten mit begrenzten Ressourcen (301 - 303, 311 - 315) eines Sensornetzes (300), ausgebildet zur Kommunikation mittels eines energieeffizienten Nachrichtenübermittlungsprotokolls unter Verwendung einer TinySIP-Messaging-Bibliothek, die in dem Sensorknoten mit begrenzten Ressourcen implementiert ist, wobei die TinySIP-Messaging-Bibliothek eine Sammlung von Unterprogrammen umfasst, die dazu angepasst sind, empfangene TinySIP-Nachrichten zu verarbeiten und TinySIP-Nachrichten zu erzeugen, wobei die TinySIP-Nachricht eine Datennachricht eines SIP-Netzprotokolls darstellt, und wobei die TinySIP-Nachricht eine maximale Größe von 29 Byte aufweist,
wobei die TinySIP-Nachricht einen ersten (120) und einen zweiten (130, 140) Datenblock umfasst, wobei
- der zweite Datenblock (130, 140) kompakte Dateneinheiten mindestens zweier verschiedener Typen (131, 141; 132, 142) umfasst und
- der erste Datenblock (120) eine passende Dateneinheit für jede der kompakten Dateneinheiten des zweiten Datenblocks (130, 140) umfasst, wobei der Wert der jeweiligen passenden Dateneinheit in dem ersten Datenblock dem Typ der passenden kompakten Dateneinheit (131, 132, 141, 142) in dem zweiten Datenblock (130, 140) zugeordnet ist, wobei
- der zweite Datenblock (130, 140) mindestens eine kompakte Dateneinheit eines ersten Typs (131, 141) umfasst, der einen numerischen Wert umfasst, welcher einem Feldnamen eines Feldes wie durch das SIP-Netzprotokoll definiert zugeordnet ist, und
- der zweite Datenblock (130, 140) für jede kompakte Dateneinheit des ersten Typs (131, 141) eine variable Anzahl von zugehörigen kompakten Dateneinheiten eines zweiten Typs (132, 142) umfasst, wobei die Anzahl von dem numerischen Wert der zugeordneten kompakten Dateneinheit des ersten Typs (131, 141) abhängt,
wobei die TinySIP-Messaging-Bibliothek ein Nachrichtenbearbeitungselement zur Behandlung von eingehenden TinySIP-Nachrichten umfasst, welches die eingehenden TinySIP-Nachrichten empfängt und diese analysiert, wobei der Körper der TinySIP-Nachricht die Abfrage oder den Befehl, die ausgeführt werden sollen, enthält, und wobei das Nachrichtenbearbeitungselement TinySIP-Methoden bearbeitet, die ACK, BYE, INVITE, MESSAGE, NOTIFY, OPTION, PUBLISH und SUBSCRIBE umfassen, wobei eine Eins-zu-Eins-Entsprechung zwischen den TinySIP-Methoden und SIP-Methoden besteht.

2. Sensorknoten mit begrenzten Ressourcen nach Anspruch 1, wobei
- der zweite Datenblock (130, 140) mindestens zwei aufeinanderfolgende Sequenzen von kompakten Dateneinheiten umfasst und
- der erste Datenblock (120) mindestens eine zusätzliche Begrenzungsdateneinheit umfasst, die sich an einer Position innerhalb des ersten Datenblocks (120) befindet, die eine Sequenzänderung in den kompakten Dateneinheiten innerhalb des zweiten Datenblocks (130, 140) anzeigt.

3. Sensorknoten mit begrenzten Ressourcen nach einem der Ansprüche 1 oder 2, wobei die Dateneinheiten in dem ersten Datenblock (120) Datenbits sind.

4. Sensorknoten mit begrenzten Ressourcen nach einem der Ansprüche 1 bis 3, wobei die kompakten Dateneinheiten in dem zweiten Datenblock (130, 140) Datenbytes sind.

5. Sensorknoten mit begrenzten Ressourcen nach einem der Ansprüche 1 bis 4, wobei der erste Datenblock (120) drei Datenbytes umfasst und der zweite Datenblock (130, 140) 21 Datenbytes umfasst, und wobei 21 Datenbits des ersten Datenblocks (120) jeweils den 21 Datenbytes des zweiten Datenblocks (130, 140) zugeordnet sind.

6. Sensorknoten mit begrenzten Ressourcen nach einem der Ansprüche 1 bis 5, wobei die TinySIP-Nachricht ferner eine Dateneinheit (114) zur Definition eines Typs der TinySIP-Nachricht umfasst.

7. Sensorknoten mit begrenzten Ressourcen nach einem der Ansprüche 1 bis 6, wobei die TinySIP-Nachricht ferner eine Dateneinheit (112) zur Definition einer Zieladresse umfasst.

8. Verfahren zum Übertragen einer Datennachricht innerhalb eines Sensornetzes, wobei das Sensornetz mindestens einen ersten und einen zweiten Sensorknoten mit begrenzten Ressourcen gemäß einem der Ansprüche 1 bis 7 umfasst, mit folgenden Schritten:
- Erzeugen einer TinySIP-Nachricht (20) durch den ersten Knoten mit begrenzten Ressourcen (301 - 303),
- Übertragen der TinySIP-Nachricht von dem ersten Knoten mit begrenzten Ressourcen (301 - 303) zu dem zweiten Knoten mit begrenzten Ressourcen (301 - 303) des Sensornetzes (300),
- Verarbeiten der empfangenen TinySIP-Nachricht durch den zweiten Knoten mit begrenzten Ressourcen (301 - 303) unter Verwendung einer TinySIP-Messaging-Bibliothek, die in dem zweiten Sensorknoten mit begrenzten Ressourcen implementiert ist, wobei die TinySIP-Messaging-Bibliothek eine Sammlung von Unterprogrammen umfasst, die dazu angepasst sind, empfangene TinySIP-Nachrichten zu verarbeiten und TinySIP-Nachrichten zu erzeugen, wobei die TinySIP-Nachricht eine Datennachricht eines SIP-Netzprotokolls darstellt, und wobei die TinySIP-Nachricht eine maximale Größe von 29 Byte aufweist, wobei die TinySIP-Messaging-Bibliothek ein Nachrichtenbearbeitungselement zur Behandlung von eingehenden TinySIP-Nachrichten umfasst, welches die eingehenden TinySIP-Nachrichten empfängt und diese analysiert, wobei der Körper der TinySIP-Nachricht die Abfrage oder den Befehl, die ausgeführt werden sollen, enthält, und wobei das Nachrichtenbearbeitungselement TinySIP-Methoden bearbeitet, die ACK, BYE, INVITE, MESSAGE, NOTIFY, OPTION, PUBLISH und SUBSCRIBE umfassen, wobei eine Eins-zu-Eins-Entsprechung zwischen den TinySIP-Methoden und SIP-Methoden besteht.

9. Verfahren zur Kommunikation mit einem Sensorknoten mit begrenzten Ressourcen (301 - 303) gemäß einem der Ansprüche 1 bis 7 eines Sensornetzes (300), mit folgenden Schritten:
- Erzeugen einer SIP-Nachricht durch eine Kommunikationseinheit (201 - 204) außerhalb des Sensornetzes (300),
- Übertragen der SIP-Nachricht von der Kommunikationseinheit (201 - 204) an ein dem Sensornetz (300) zugeordnetes Gateway-Modul (350),
- Umwandeln der SIP-Nachricht in eine TinySIP-Nachricht (20), durch das Gateway-Modul (350), und
- Übertragen der TinySIP-Nachricht (20) von dem Gateway-Modul (350) zu dem Sensorknoten mit begrenzten Ressourcen (301 - 303) des Sensornetzes (300),
- Verarbeiten der empfangenen TinySIP-Nachricht durch den Sensorknoten mit begrenzten Ressourcen (301 - 303) unter Verwendung einer TinySIP-Messaging-Bibliothek, die in dem Sensorknoten mit begrenzten Ressourcen implementiert ist, wobei die TinySIP-Messaging-Bibliothek eine Sammlung von Unterprogrammen umfasst, die dazu angepasst sind, empfangene TinySIP-Nachrichten zu verarbeiten und TinySIP-Nachrichten zu erzeugen, wobei die TinySIP-Nachricht eine Datennachricht eines SIP-Netzprotokolls darstellt, und wobei die TinySIP-Nachricht eine maximale Größe von 29 Byte aufweist,
wobei die TinySIP-Messaging-Bibliothek ein Nachrichtenbearbeitungselement zur Behandlung von eingehenden TinySIP-Nachrichten umfasst, welches die eingehenden TinySIP-Nachrichten empfängt und diese analysiert, wobei der Körper der TinySIP-Nachricht die Abfrage oder den Befehl, die ausgeführt werden sollen, enthält, und wobei das Nachrichtenbearbeitungselement TinySIP-Methoden bearbeitet, die ACK, BYE, INVITE, MESSAGE, NOTIFY, OPTION, PUBLISH und SUBSCRIBE umfassen, wobei eine Eins-zu-Eins-Entsprechung zwischen den TinySIP-Methoden und SIP-Methoden besteht.

10. Verfahren zur Kommunikation zwischen verschiedenen Sensornetzen, mit folgenden Schritten:
- Erzeugen einer ersten TinySIP-Nachricht (20) durch einen ersten Sensorknoten mit begrenzten Ressourcen gemäß einem der Ansprüche 1 bis 7 eines ersten Sensornetzes,
- Übertragen der ersten TinySIP-Nachricht (20) von dem ersten Sensorknoten mit begrenzten Ressourcen an ein erstes Gateway-Modul, das dem ersten Sensornetz zugeordnet ist,
- Umwandeln der ersten TinySIP-Nachricht (20) in eine SIP-Nachricht, durch das erste Gateway-Modul,
- Übertragen der SIP-Nachricht von dem ersten Gateway-Modul zu einem zweiten Gateway-Modul, das einem zweiten Sensornetz zugeordnet ist,
- Umwandeln der SIP-Nachricht in eine zweite TinySIP-Nachricht (20), durch das zweite Gateway-Modul,
- Übertragen der zweiten TinySIP-Nachricht (20) von dem zweiten Gateway-Modul zu einem zweiten Sensorknoten mit begrenzten Ressourcen gemäß einem der Ansprüche 1 bis 7 des zweiten Sensornetzes, und
- Verarbeiten der empfangenen zweiten TinySIP-Nachricht durch den zweiten Sensorknoten mit begrenzten Ressourcen (301 - 303) unter Verwendung einer TinySIP-Messaging-Bibliothek, die in dem zweiten Sensorknoten mit begrenzten Ressourcen implementiert ist, wobei die TinySIP-Messaging-Bibliothek eine Sammlung von Unterprogrammen umfasst, die dazu angepasst sind, empfangene TinySIP-Nachrichten zu verarbeiten und TinySIP-Nachrichten zu erzeugen,
wobei die TinySIP-Nachricht eine Datennachricht eines SIP-Netzprotokolls darstellt, und wobei die TinySIP-Nachricht eine maximale Größe von 29 Byte aufweist, wobei die TinySIP-Messaging-Bibliothek ein Nachrichtenbearbeitungselement zur Behandlung von eingehenden TinySIP-Nachrichten umfasst, welches die eingehenden TinySIP-Nachrichten empfängt und diese analysiert, wobei der Körper der TinySIP-Nachricht die Abfrage oder den Befehl, die ausgeführt werden sollen, enthält, und wobei das Nachrichtenbearbeitungselement TinySIP-Methoden bearbeitet, die ACK, BYE, INVITE, MESSAGE, NOTIFY, OPTION, PUBLISH und SUBSCRIBE umfassen, wobei eine Eins-zu-Eins-Entsprechung zwischen den TinySIP-Methoden und SIP-Methoden besteht.

11. Verfahren nach einem der Ansprüche 8 bis 10, wobei die Kommunikation auf einer vordefinierten Kommunikationssemantik basiert.

12. Verfahren nach Anspruch 11, wobei die Kommunikationssemantik Instant Messaging, Session-Semantik oder Publish/Subscribe-Semantik ist.

## Revendications

1. Noeud capteur avec contraintes de ressources (301 à 303, 311 à 315) dans un réseau de capteurs (300), conçu pour communiquer à l'aide d'un protocole de messagerie énergétiquement efficace qui utilise une bibliothèque de messagerie TinySIP mise en oeuvre sur le noeud capteur avec contraintes de ressources, dans lequel ladite bibliothèque de messagerie TinySIP comprend une collection de sous-programmes conçus pour traiter les messages TinySIP reçus et en produire, dans lequel le message TinySIP représente un message de données d'un protocole de réseau SIP et dans lequel le message TinySIP a une taille maximale de 29 octets,
ledit message TinySIP comprenant un premier (120) et un second (130, 140) bloc de données, dans lequel
- le second bloc de données (130, 140) comprend des unités de données compactes d'au moins deux types différents (131, 141 ; 132, 142) ; et
- le premier bloc de données (120) comprend une unité de données qui correspond à chacune desdites unités de données compactes du second bloc de données (130, 140), dans lequel la valeur de chaque unité de données correspondante dans le premier bloc de données est associée au type de l'unité de données compacte correspondante (131, 132, 141, 142) dans le second bloc de données (130, 140) ; dans lequel
- le second bloc de données (130, 140) comprend au moins une unité de données compacte d'un premier type (131, 141) qui comprend une valeur numérique associée à un nom de champ d'un champ défini par le protocole de réseau SIP ; et
- le second bloc de données (130, 140) comprend pour chaque unité de données compacte dudit premier type (131, 141) un nombre variable d'unités de données compactes associées d'un second type (132, 142), dans lequel ledit nombre dépend de la valeur numérique de l'unité de données compacte associée du premier type (131, 141) ;
dans lequel la bibliothèque de messagerie TinySIP comprend un élément de traitement de messages qui est destiné à traiter les messages TinySIP entrants et qui reçoit les messages TinySIP entrants et les analyse, dans lequel le corps du message TinySIP contient l'interrogation ou l'instruction à exécuter et dans lequel l'élément de traitement de messages traite des méthodes TinySIP comprenant ACK, BYE, INVITE, MESSAGE, NOTIFY, OPTION, PUBLISH et SUBSCRIBE, dans lequel il existe une correspondance terme à terme entre lesdites méthodes TinySIP et des méthodes SIP.

2. Noeud capteur avec contraintes de ressources selon la revendication 1, dans lequel :
- le second bloc de données (130, 140) comprend au moins deux séquences consécutives d'unités de données compactes et
- le premier bloc de données (120) comprend au moins une unité de données supplémentaire de délimitation située dans une position au sein du premier bloc de données (120) qui indique un changement de séquence dans les unités de données compactes se trouvant au sein du second bloc de données (130, 140).

3. Noeud capteur avec contraintes de ressources selon l'une quelconque des revendications 1 et 2, dans lequel les unités de données dans le premier bloc de données (120) sont des bits de données.

4. Noeud capteur avec contraintes de ressources selon l'une quelconque des revendications 1 à 3, dans lequel les unités de données compactes dans le second bloc de données (130, 140) sont des octets de données.

5. Noeud capteur avec contraintes de ressources selon l'une quelconque des revendications 1 à 4, dans lequel le premier bloc de données (120) comprend trois octets de données et le second bloc de données (130, 140) comprend 21 octets de données et dans lequel 21 bits de données du premier bloc de données (120) sont associés respectivement aux 21 octets de données du second bloc de données (130, 140).

6. Noeud capteur avec contraintes de ressources selon l'une quelconque des revendications 1 à 5, dans lequel le message TinySIP comprend en outre une unité de données (114) destinée à définir un type du message TinySIP.

7. Noeud capteur avec contraintes de ressources selon l'une quelconque des revendications 1 à 6, dans lequel le message TinySIP comprend en outre une unité de données (112) destinée à définir une adresse de destination.

8. Procédé de transmission d'un message de données au sein d'un réseau de capteurs, ledit réseau de capteurs comprenant au moins un premier et un second noeud capteur avec contraintes de ressources selon l'une quelconque des revendications 1 à 7, comprenant les étapes consistant à :
- produire un message TinySIP (20) par le premier noeud capteur avec contraintes de ressources (301 à 303) ;
- transmettre ledit message TinySIP entre le premier noeud capteur avec contraintes de ressources (301 à 303) et le second noeud capteur avec contraintes de ressources (301 à 303) du réseau de capteurs (300) ;
- traiter le message TinySIP reçu par le second noeud capteur avec contraintes de ressources (301 à 303) à l'aide d'une bibliothèque de messagerie TinySIP mise en oeuvre sur le second noeud capteur avec contraintes de ressources, dans lequel ladite bibliothèque de messagerie TinySIP comprend une collection de sous-programmes conçus pour traiter les messages TinySIP reçus et en produire, dans lequel le message TinySIP représente un message de données d'un protocole de réseau SIP et dans lequel le message TinySIP a une taille maximale de 29 octets,
dans lequel la bibliothèque de messagerie TinySIP comprend un élément de traitement de messages qui est destiné à traiter les messages TinySIP entrants et qui reçoit les messages TinySIP entrants et les analyse, dans lequel le corps du message TinySIP contient l'interrogation ou l'instruction à exécuter et dans lequel l'élément de traitement de messages traite des méthodes TinySIP comprenant ACK, BYE, INVITE, MESSAGE, NOTIFY, OPTION, PUBLISH et SUBSCRIBE, dans lequel il existe une correspondance terme à terme entre lesdites méthodes TinySIP et des méthodes SIP.

9. Procédé de communication avec un noeud capteur avec contraintes de ressources selon l'une quelconque des revendications 1 à 7 sur un réseau de capteurs (300), comprenant les étapes consistant à :
- produire un message SIP par une unité de communication (201 à 204) extérieure audit réseau de capteurs (300) ;
- transmettre ledit message SIP entre ladite unité de communication (201 à 204) et un module passerelle (350) associé au réseau de capteurs (300) ;
- convertir ledit message SIP en un message TinySIP (20) par ledit module passerelle (350) ; et
- transmettre ledit message TinySIP (20) entre le module passerelle (350) et le noeud capteur avec contraintes de ressources (301 à 303) du réseau de capteurs (300) ;
- traiter le message TinySIP reçu par ledit noeud capteur avec contraintes de ressources (301 à 303) à l'aide d'une bibliothèque de messagerie TinySIP mise en oeuvre sur le noeud capteur avec contraintes de ressources, dans lequel ladite bibliothèque de messagerie TinySIP comprend une collection de sous-programmes conçus pour traiter les messages TinySIP reçus et en produire, dans lequel le message TinySIP représente un message de données d'un protocole de réseau SIP et dans lequel le message TinySIP a une taille maximale de 29 octets, dans lequel la bibliothèque de messagerie TinySIP comprend un élément de traitement de messages qui est destiné à traiter les messages TinySIP entrants et qui reçoit les messages TinySIP entrants et les analyse, dans lequel le corps du message TinySIP contient l'interrogation ou l'instruction à exécuter et dans lequel l'élément de traitement de messages traite des méthodes TinySIP comprenant ACK, BYE, INVITE, MESSAGE, NOTIFY, OPTION, PUBLISH et SUBSCRIBE, dans lequel il existe une correspondance terme à terme entre lesdites méthodes TinySIP et des méthodes SIP.

10. Procédé de communication entre différents réseaux de capteurs, comprenant les étapes consistant à :
- produire un premier message TinySIP (20) par un premier noeud capteur avec contraintes de ressources selon l'une quelconque des revendications 1 à 7 d'un premier réseau de capteurs ;
- transmettre ledit premier message TinySIP (20) entre ledit premier noeud capteur avec contraintes de ressources et un premier module passerelle associé au premier réseau de capteurs ;
- convertir ledit premier message TinySIP (20) en un message SIP par ledit premier module passerelle ;
- transmettre ledit message SIP entre le premier module passerelle et un second module passerelle associé à un second réseau de capteurs ;
- convertir ledit message SIP en un second message TinySIP (20) par ledit second module passerelle ;
- transmettre ledit second message TinySIP (20) entre le second module passerelle et un second noeud capteur avec contraintes de ressources selon l'une quelconque des revendications 1 à 7 du second réseau de capteurs ; et
- traiter le second message TinySIP (20) reçu par le second noeud capteur avec contraintes de ressources (301 à 303) à l'aide d'une bibliothèque de messagerie TinySIP mise en oeuvre sur le second noeud capteur avec contraintes de ressources, dans lequel ladite bibliothèque de messagerie TinySIP comprend une collection de sous-programmes conçus pour traiter les messages TinySIP reçus et en produire, dans lequel le message TinySIP représente un message de données d'un protocole de réseau SIP et dans lequel le message TinySIP a une taille maximale de 29 octets,
dans lequel la bibliothèque de messagerie TinySIP comprend un élément de traitement de messages qui est destiné à traiter les messages TinySIP entrants et qui reçoit les messages TinySIP entrants et les analyse, dans lequel le corps du message TinySIP contient l'interrogation ou l'instruction à exécuter et dans lequel l'élément de traitement de messages traite des méthodes TinySIP comprenant ACK, BYE, INVITE, MESSAGE, NOTIFY, OPTION, PUBLISH et SUBSCRIBE, dans lequel il existe une correspondance terme à terme entre lesdites méthodes TinySIP et des méthodes SIP.

11. Procédé selon l'une quelconque des revendications 8 à 10, dans lequel ladite communication est fondée sur une sémantique de communication prédéfinie.

12. Procédé selon la revendication 11, dans lequel ladite sémantique de communication est la messagerie instantanée, la sémantique de session ou la sémantique de publication/souscription.
